# EUROPEAN PATENT APPLICATION

(11) **EP 2 821 129 A1**
(43) Date of publication of application: **07.01.2015**
(21) Application number: 13175254.5
(22) Date of filing: 05.07.2013
(51) Int. Cl.: B01F 5/02, B01F 5/04, B01F 7/00, B01F 15/00, B01F 3/04, F03B 11/00

(54) **Apparatus for treatment of liquid**

(71) Applicant: Happihyrrä Oy, 00120 Helsinki (FI)
(72) Inventor: Pylkkänen, Juhani, CH-3923 Toerbel (CH); Seppälä, Mikael, 00210 Helsinki (FI)
(74) Representative: Kolster Oy Ab

(57) **Abstract**

An apparatus for treatment of liquid, comprising a liquid receiving surface (7) construed from a plate-like element (15), the plate-like element (15) comprising plurality of holes (18) extending from said liquid receiving surface (7) to another side of the plate-like element (15), and means for guiding liquid as high velocity flow (F) against said liquid receiving surface (7) in an angle of incidence (A).

## Description

### Background

The invention relates to an apparatus for treatment of liquid.

Need for mixing gas with liquid may emerge for various reasons. Usually this need relates to dissolving of air in water, e.g. aerating lakes etc. natural water basins, or with effluent or sewage water treatment. It is known great number of methods and apparatuses for said purposes. Nevertheless, there are still need for more effective and less power consuming method and apparatus for said purpose.

### Brief description

Viewed from a first aspect, there can be provided an apparatus for treatment of liquid comprising a liquid receiving surface construed from a plate-like element, the plate-like element comprising plurality of holes extending from said liquid receiving surface to another side of the plate-like element, and means for guiding liquid as high velocity flow against said liquid receiving surface in an angle of incidence.

Thereby a simple and highly effective apparatus for mixing one or more additive(s) with liquid or separating dissolved matter, such as gas, from liquid may be achieved.

The apparatus is characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit subtasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment said liquid is arranged to flow mainly in a first flowing direction on said liquid receiving surface by directing said liquid receiving surface relative to said high velocity flow, and the liquid receiving surface comprises projections, the projection having at least one of the holes being arranged to open up to the first flowing direction. An advantage may be that the flowing speed of liquid will increase as it flows over the projection, thus a sucking effect is created in the hole.

In one embodiment the liquid receiving surface is a layer of a layered structure, wherein the plate is arranged at a distance from a support element such that there is a gap between said plate and said next material layer, and wherein the hole has a communicating relation with the gap. An advantage may be that additives, such as gas, may be delivered into liquid from said gap.

In one embodiment the apparatus comprises a rotating device, the rotating device comprising plurality of blades arranged in circumferential manner around the rotating axle of the rotating device, and wherein the liquid receiving surface is arranged in said blades. An advantage may be that a charging apparatus can be coupled to the rotating device.

In one embodiment the apparatus comprises a vortex channel, the vortex channel comprising a flow directing wall arranged to guide the liquid, the flow directing wall comprising a guide surface arranged thereto and obliquely to the longitudinal axis of the vortex channel. An advantage may be that the mixing of additive is contributed.

In one embodiment the apparatus comprises means for diverging water into plurality of vortexes comprises a liquid guiding guide vane arranged obliquely to the longitudinal axis of the diverging device. An advantage may be that the mixing of additive is contributed.

### Brief description of figures

Some embodiments illustrating the present disclosure are described in more detail in the attached drawings, in which
Figure 1a is a schematic side view of an example apparatus in partial cross-section,
Figure 1b is a schematic top view of the apparatus shown in Figure 1 a,
Figure 2a is a schematic side view of a detail of an example apparatus in partial cross-section,
Figure 2b is a schematic cross-section view of a part of the detail shown in Figure 2a,
Figure 2c is a schematic top view of a part of the detail shown in Figure 2b,
Figure 3 is a schematic cross-section view of a part of a detail of an example apparatus in partial cross-section,
Figure 4 is a schematic cross-section view of a part of a detail of an example apparatus in partial cross-section,
Figure 5a is a schematic side view of a detail of an example apparatus in partial cross-section,
Figure 5b is a schematic cross-section view of the detail shown in Figure 5a,
Figure 6a is a schematic top view of another detail of an example apparatus,
Figure 6b is a schematic cross-section view of the detail shown in Figure 6a, and
Figure 7a is a schematic cross-section view of a part of a detail of example apparatus in partial cross-section,
Figure 7b is a schematic cross-section view of a part of a detail of example apparatus in partial cross-section, and
Figure 7c is a schematic cross-section view of a part of a detail of example apparatus in partial cross-section.

In the figures, some embodiments are shown simplified for the sake of clarity. Similar parts are marked with the same reference numbers in the figures.

### Detailed description

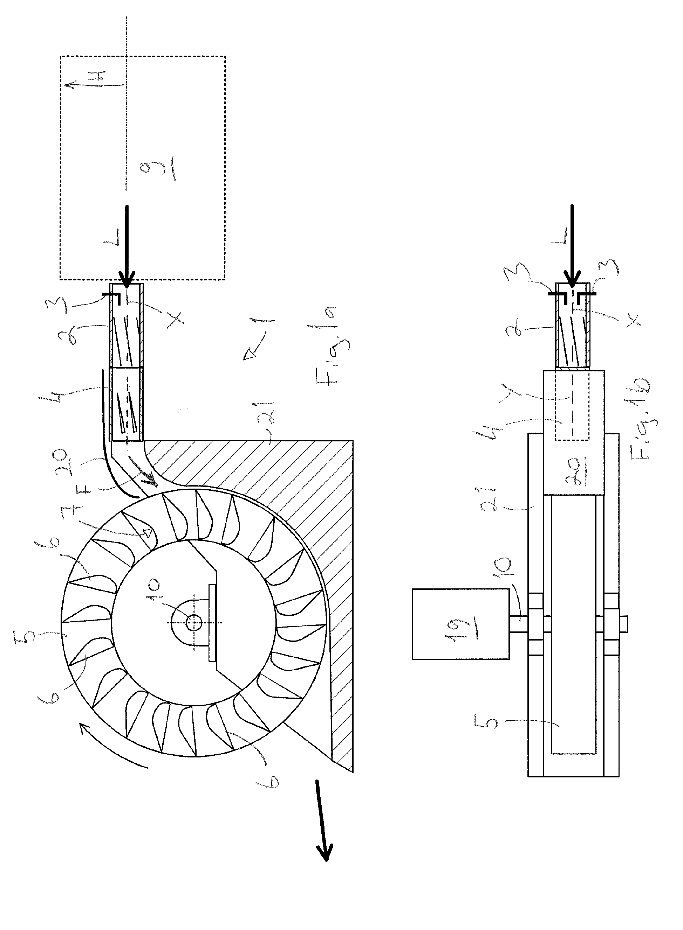

Figure 1 a is a schematic side view of an example apparatus in partial cross-section and Figure 1b is a schematic top view of the very same apparatus.

The apparatus 1 shown in Figure 1 a comprises a body 21 made of e.g. concrete. The body 21 may be manufactured prior to its transfer to the placement of the apparatus 1. The body 21 may be attached to its surroundings by e.g. bolts.

According to another embodiment the body 21 or at least part of it may be manufactured on the spot.

According to still another embodiment the apparatus 21 may not comprise artificial body at all but the parts and components of the apparatus 1 are supported by natural formation of earth.

The apparatus 1 may comprise a vortex channel 2 for receiving liquid L that is entering to the apparatus, a diverging device 4 arranged downstream to the vortex channel 2 for receiving liquid and any additive mixed therewith form the vortex channel 2, and a rotating device 5 arranged downstream to the diverging device 4 for receiving liquid and any additive mixed therewith form the diverging device 4.

Said liquid L may comprise e.g. water. It may be natural water of a natural water basin, such as a sea, a lake, a river, a brook etc.

Alternatively, liquid L may be effluent or sewage or drainage water etc. of a production plant, such as an industrial plant, a power station, water purification plant etc., or of community drainage water etc.

Alternatively, the liquid may be any viscose material that is needed to be treated, e.g. aerate or disperse with air, oxygen, ozone or any other disperse agent.

The liquid enters to the apparatus 1 form a liquid source 9 forced by hydraulic head H. The liquid source 9 may be a natural basin of liquid or an artificial basin.

The additive may comprise gas G, for instance oxygen, nitrogen, ozone, hydrogen, carbon oxide, carbon dioxide, hydrochloric acid etc.

According to an embodiment of the invention, liquid, e.g. water, is oxygenated in order to facilitate separation of dirt, sulphur compounds, metals, heavy metal compounds, radioactive compounds etc. from said liquid.

The gas G may comprise one or more dispersing agent(s) with or without surfactants, or a mixture of two or more gases, such as air.

The dispersing agent(s) may be material for preventing formation of bio-fouling or biofilms in e.g. waste water treatment or industrial processes. According to an embodiment the dispersing agent disperses bacterial slime and/or increase the efficiency of biocides.

The vortex channel 2 may comprise an ejector conduit 3 that is capable to feed additives into said liquid L. The vortex channel 2 will be described more detailed later in this description. It is to be noted, however, that the basic form of the vortex channel 2 may be tube-like or gutter-like.

The diverging device 4 comprises means for diverging liquid L into plurality of vortexes. Also the structure of the diverging device 4 will be described more detailed later in this description.

The vortex channel 2 is aligned with the diverging device 4 in the apparatus shown in Figure 1 a. In other words, their longitudinal axes X are on same straight line. It is to be noted, however, that this is not necessary. The longitudinal axes may be arranged in a blunt or an acute angle, or the longitudinal axis of the vortex channel 2 may be arranged such that its extension is parallel with the longitudinal axis of the diverging device 4.

It is also possible that the vortex channel 2 and/or the diverging device 4 is/are not straight but curved channel.

The vortex channel 2 and the diverging device 4 are arranged on horizontal plane in Figure 1a. In another embodiment the vortex channel 2 and/or the diverging device 4 is/are arranged in an inclined plane.

According to an embodiment the vortex channel 2 is integrated with the diverging device 4.

The rotating device 5 comprises plurality of blades 6 arranged in circumferential manner around the rotating axle 10 of the rotating device 5.

In the example apparatus shown in Figure 1 the rotating axle 5 is arranged horizontally. According to other embodiments the rotating axle 5 may be arranged vertically or diagonally.

The blades 6 receive a high velocity flow F of liquid mixed with additive from the diverging device 4. Potential energy and/or kinetic energy of the high velocity flow F entering from the diverging device and colliding with a liquid receiving surface 7 of the blade causes the rotating device 5 to rotate around the rotating axle 10.

In the example apparatus shown in Figure 1a there are twenty (20) blades 6 arranged in the rotating device 5. However, it is self-evident that the number of the blades 6 may vary. The structure of the blade 6 will be described more detailed later in this description.

The apparatus may comprise a guiding element 20 that is arranged to direct the high velocity flow F to the blades 6 and the receiving surfaces 7 therein. The receiving surfaces 7 may function as ejectors and feed gas into liquid. The guiding element 20 may comprise a nozzle etc. that raises the velocity of the high velocity flow F and the impulse energy thereof.

The additive may be fed into the liquid L via the vortex channel 2, diverging device 4 and guiding element 20, and/or the blades 6. Different kinds of additives can be fed into the liquid L at the same time, e.g. one type of gas via the vortex channel 2, another type of gas via diverging device 4, and air via the guiding element 20 and the blades 6.

The apparatus may comprise a charging apparatus 19 that is coupled to the rotating device 5. The charging apparatus 19 is arranged to resist the rotational movement of the rotating device 5, the movement of which is caused by potential energy and/or kinetic energy of the liquid L mixed with the additive. The resistance of the rotational movement of the rotating device 5 may have an important role in increasing the efficiency of mixing gas with liquid.

The charging apparatus 19 may comprise a generator for producing electrical energy. Thus electrical energy can be produced with the apparatus 1.

The charging apparatus 19 may comprise a pump for pumping flowing medium. Thus energy of pressurized medium can be produced with the apparatus 1.

The charging apparatus 19 may comprise a mechanism that is arranged to convert rotational movement of the rotating axle 10 into mechanical work.

The charging apparatus 19 may comprise a brake. The charging apparatus 19 may comprise e.g. a gear system etc. According to an embodiment the charging apparatus 19 may be used as an auxiliary apparatus for further mixing gas with liquid.

It is to be noted here that the vortex channel 2, the ejector conduits 3, the diverging device 4 and the rotating device 5 are only optional features of the apparatus 1.

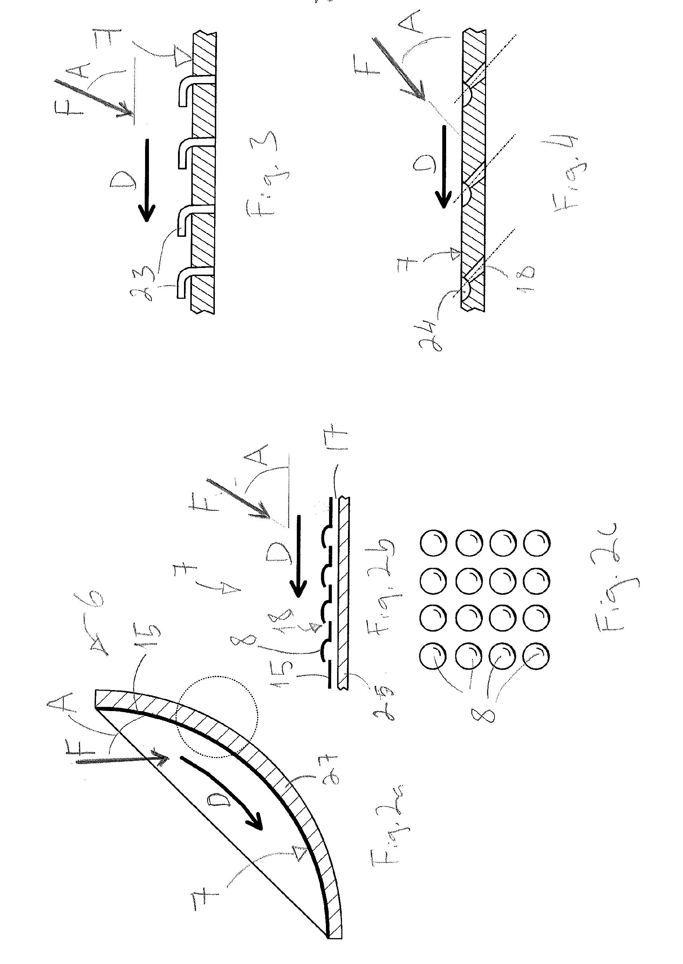

Figure 2a is a schematic side view of a detail of an example apparatus in partial cross-section, Figure 2b is a schematic cross-section view of a part of the detail shown in Figure 2a, and Figure 2c is a schematic top view of a part of the detail shown in Figure 2b.

The apparatus 1 comprises a liquid receiving surface 7 construed from a plate-like element 15 which comprises plurality of holes 18 extending from said liquid receiving surface 7 to another side of the plate-like element 15.

The liquid receiving surface 7 may be arranged in a movable support element 27, such as the blades 6 shown in Figure 1a, or in a stationary element, etc.

The blade 6 may have a concave liquid receiving surface 7. The liquid is guided as high velocity flow F against the liquid receiving surface 7 in an angle of incidence A. According to an embodiment the angle of incidence A is in range of 45° - 90°. The inventors have observed that said range is advantageous for converting kinetic energy of the high velocity flow F into impulse energy, especially in processes for dissolving air, oxygen or other gases into liquid. The conversion of kinetic energy into impulse energy may base on decreasing of velocity of the high velocity flow F, and/or on stopping or halting the high velocity flow F. The decreasing of velocity may take place in a conical surface or an expanding tube. The stopping or halting of the high velocity flow may be implemented by a stationary or slowly moving receiving surface.

The direction of the high velocity flow F changes due to the collision with liquid receiving surface 7. The liquid receiving surface 7 may be shaped so that it guides liquid to flow mainly in a first flowing direction D.

The high velocity flow F causes an impulse force in the liquid receiving surface 7. The impulse force affects for certain length on the liquid receiving surface 7 and gives energy not only for mechanical work but also for the treatment of liquid, i.e. for a process of mixing additive(s) with liquid or separating dissolved matter, such as gas, from liquid. Said impulse energy may be enough for carrying out the treatment of liquid completely, i.e. without any further treatment steps or devices. Without wishing to be bound by any theory but even then explaining the process of the treatment with the double film theory, it is believed that the impulse energy breaks thin films that are separating liquid phase from gas phase. Said thin films resists mass transfers between the liquid phase and the gas phase, i.e. dissolution or separation of said phases. The impulse force generated by the apparatus of the invention breaks said thin films, so that the resistance caused by the films disappears.

The separation from the liquid takes place when the liquid is in saturated or near saturated state. The inventors have observed that a quick impulse work is advantageous when separating dissolved matter from liquid.

The dissolution into liquid takes place when the liquid is in under-saturated state. The inventors have observed that a softer or slower impulse treatment is advantageous when dissolving matter into liquid.

All the blades 6 arranged to the rotating device 5 may have same structure, or some of them may differ from another one.

According to another embodiment, the liquid receiving surface 7 is not concave but straight or propeller-like.

The liquid receiving surface 7 may comprise at least one projection 8 as shown in Figures 2b and 2c. The projection 8 may have one or more hole(s) 18 that opens up to the first flowing direction D. A gap 17 may be arranged between the plate-like element 15 construing the liquid receiving surface 7 and the support element 25. The hole 18 is in a communicating relation to said gap 17.

As liquid L flows over the projection 8, its flowing speed will increase. Fast flowing liquid L creates a sucking effect in the hole 18. Due to the sucking effect gas from the gap 17 may be delivered into liquid L. Thus even more gas may be dissolved in liquid L.

The projection 8 may be manufactured e.g. by partial die cutting of the plate 15 etc. The shape, size, number, placing etc. of the projections 8 may vary.

The projection 8 may have a point-form shape as shown in Figures but, alternatively, the projection may have a ridge-like form the dimension of which is substantially larger in first direction than in second direction. Said first direction may be transversal to the first flowing direction D.

Figure 3 is a schematic cross-section view of a part of a detail of an example apparatus in partial cross-section, and Figure 4 is a schematic cross-section view of another part of a detail of an example apparatus in partial cross-section.

According to embodiment shown in Figure 3, the liquid receiving surface 7 comprises at least one pipe 23, preferably great number of pipes 23 that are arranged to penetrate through the liquid receiving surface 7. The end of the pipe 23 that lies at the side of the liquid receiving surface 7, i.e. where the liquid is meant to flow, is arranged to direct to the first flowing direction D. The opposite end of the pipe 23 is arranged to a communicating relation to a gas source, e.g. atmosphere. Thus a low pressure is created in the pipe 23 by liquid flowing by, and gas flows through the pipe into liquid.

It is to be noted that the pipe 23 may have various configurations, e.g. it may be a straight pipe arranged obliquely to the liquid receiving surface 7 etc.

As shown in Figure 4, the liquid receiving surface 7 may comprise at least one pit 24 and at least one hole 18 arranged to join obliquely to the pit 24. Preferably, there is great number of pits 18 arranged in the liquid receiving surface 7.

The direction of the hole 18 is preferably selected so that its end in the pit 24 directs downstream of the first flowing direction D such that a low pressure is created in the hole 18 by liquid flowing by, and gas flows through the hole 18 and the pit 24 into liquid.

The hole 18 may have a constant diameter, or alternatively it may be conical as shown in Figure 8.

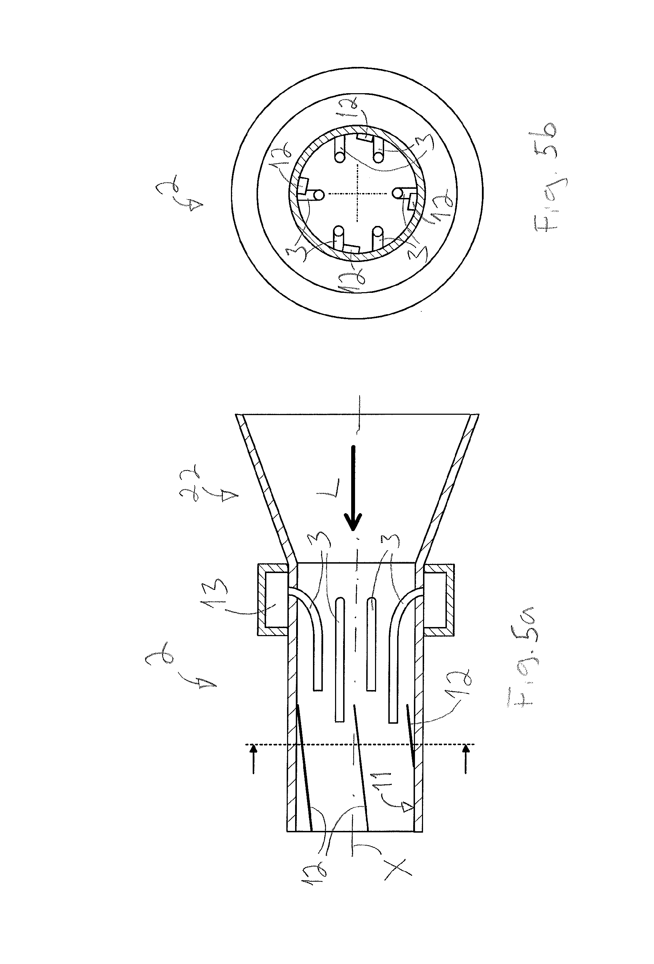

Figure 5a is a schematic side view of a vortex channel of an example apparatus in partial cross-section and Figure 5b is a schematic cross-section view of the vortex channel shown in Figure 5a.

The vortex channel 2 is basically a pipe the longitudinal axis of which is shown by reference symbol X. The cross-section of the inner surface or a flow directing wall 11 of the vortex channel 2 may be circular, oval, polygonal etc. Liquid L is arranged to enter to the vortex channel 2 in direction shown by an arrow.

The vortex channel 2 may comprise an infundibular receiving section 22. This may add the amount of liquid L entering the vortex channel 2.

The vortex channel 2 comprises at least one ejector conduit 3. The vortex channel 2 shown in Figure 5a has six (6) ejector conduits 3 which are arranged circumferentially in the flow directing wall 11. The ejector conduits 3 are arranged to feed gas G into liquid L.

According to an embodiment of the apparatus, one or more additives such as chemical agents are fed into liquid L in the vortex channel 2. The additives may comprise dispersants for preventing formation of bio-fouling or biofilms in e.g. waste water treatment or industrial processes, or material for dispersing bacterial slime and/or increase the efficiency of biocides.

Additives may be fed by one or more ejector conduit(s) 3 into liquid L, or the apparatus 1 may have separate conduits dedicated for feeding the additive. It is to be noted, however, that additives may also fed in liquid L partly or exclusively in other part of the apparatus 1. The additives may be gas, liquid, and/or solid particles.

The ejector conduits 3 may have been connected to a distributor chamber 13 that surrounds the vortex channel 2. The distributor chamber 13 may distribute gas G and further additives, if any, distributed in the ejector conduits 3 and to liquid L.

The suction effect of liquid L passing the ejector conduit may be the only force that forces gas G into liquid L. This is a very simple and inexpensive feeding system. In another embodiment gas G is pressurized in order to intensify flow of gas into liquid L.

The shape, length, number, placing, dimensions etc. of the ejector conduit 3 may vary. The ejector conduit 3 may be just an opening in the flow directing wall 11.

The flow directing wall 11 may comprise one or more guide surface(s) 12 that are arranged obliquely to the longitudinal axis X. Following this, liquid L is caused to flow in turbulent or rotational manner out of the vortex channel 2. Thus higher dissolving of gas G in liquid L may be achieved.

Deviating from the embodiment shown in Figure 5a, one or more guide surface(s) 12 may extent to past and upstream the ejector conduits 3, even to the receiving section 22. Also the angle shape, number, placing etc. of the guide surface(s) 12 may vary. Additionally, the ejector conduits 3 or at least some of them may also be located after the guide surface(s) 12 or after the vortex channel 2.

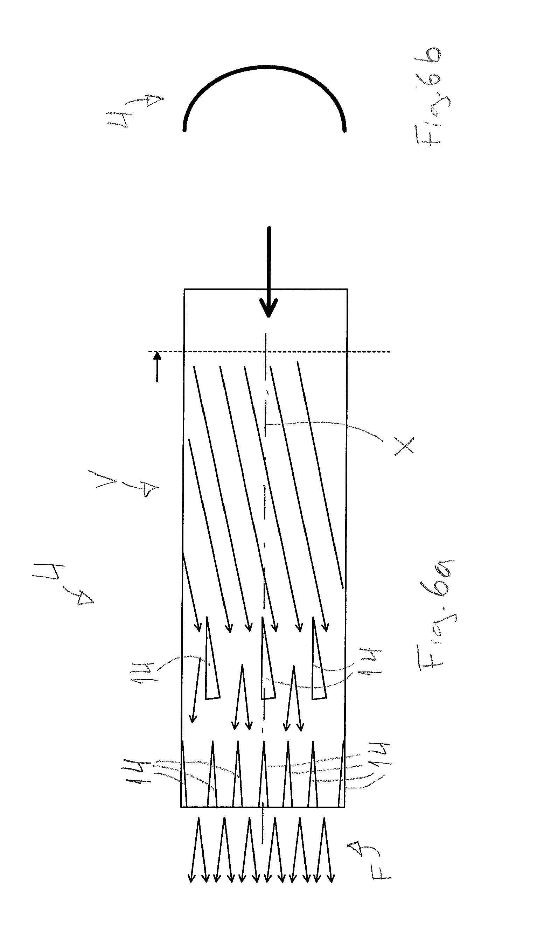

Figure 6a is a schematic top view of a diverging device for diverging water into plurality of vortexes and Figure 6b is a schematic cross-section view thereof.

The diverging device 4 may comprise at least one liquid guiding guide vane 14 arranged obliquely to the longitudinal axis X of the device 4.

The device 4 shown in Figure 6a has a form of a gutter. This form of device provides lot of interface between liquid L and surrounding atmosphere. This may enable further mixing of liquid L and gas G. It is to be noted here that the diverging device 4 shown in Figure 1 a has a form of a pipe. This form of device 4 provides lot of surface mixing liquid L with an additive. Thus an intensified mixing may be achieved.

The guide vanes 14 are arranged in two successive vane groups. Liquid L - additive mixture flowing already in turbulent or rotational manner diverges into plurality of flows F when running between and over the vanes 14. Thus additional additive may dissolve in liquid L in the diverging device 4.

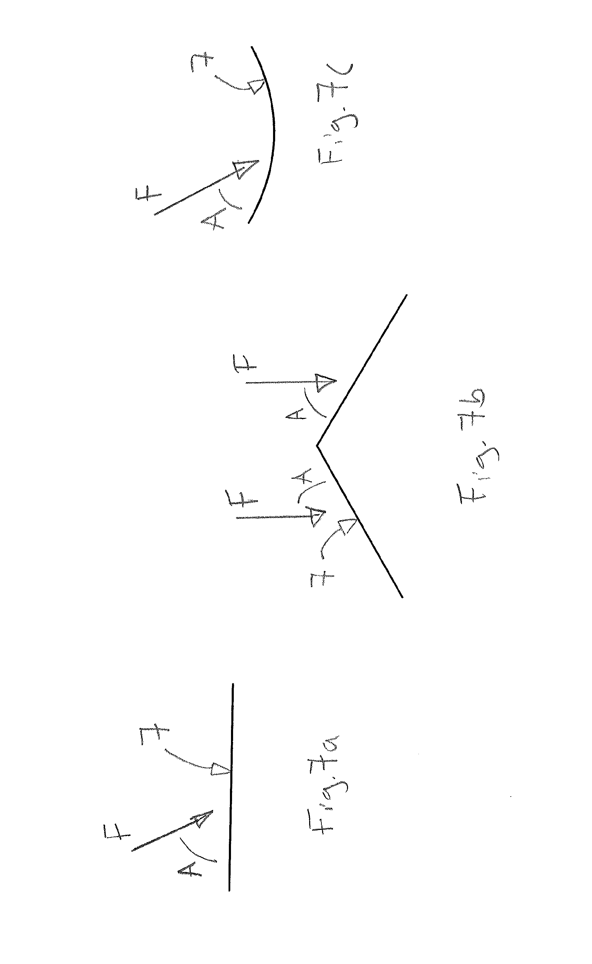

Figures 7a, 7b and 7c are schematic cross-section views of a part of a detail of example apparatuses in partial cross-section.

Each of Figures 7a - 7c shows a liquid receiving surface 7 that is arranged in a stationary way. In other words, the liquid receiving surface 7 is not a part of a rotating blade 6 of a rotating device 5. The basic shape of the liquid receiving surface 7 shown in Figure 7a is an even plate, in Figure 7b a cone, and in Figure 7c a concave.

The structure of the liquid receiving surface 7 may be similar to the structures shown in Figures 2a - 4 and described in corresponding parts of this description.

The liquid is guided as high velocity flow F against the liquid receiving surface 7 in an angle of incidence A discussed already earlier in this description.

The high velocity flow F causes an impulse force in the liquid receiving surface 7. The energy of the impulse force is used solely for a process of mixing additive(s) with liquid or separating gas from liquid.

The apparatus may have one or more of the next advantages:
- The efficiency of dissolving additive(s) with liquid is high thanks to multiple vortexes and/or turbulent flow of liquid, long flowing path of liquid molecules, throw-out phenomena taking place in the vortex channel and/or on the liquid receiving surface, and great number of small sized gas bubbles generating in liquid flowing in the apparatus;
- There is no need for any drive unit for carrying out the treatment;
- The potential and/or kinetic energy of liquid is not lost in the apparatus because said throw-out phenomena lowers flowing resistance of liquid;
- Energy may be produced in addition to dissolving additive(s) with liquid;
- The structure of the apparatus is simple, durable and inexpensive to manufacture.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### Reference symbols

- 1: apparatus
- 2: vortex channel
- 3: ejector conduit
- 4: diverging device
- 5: rotating device
- 6: blade
- 7: liquid receiving surface
- 8: projection
- 9: liquid source
- 10: rotating axle
- 11: flow directing wall
- 12: guide surface
- 13: distributor chamber
- 14: guide vane
- 15: plate-like element
- 17: gap
- 18: hole
- 19: charging apparatus
- 20: guiding element
- 21: body
- 22: receiving section
- 23: pipe
- 24: pit
- 25: support element
- A: angel of incidence
- D: first flowing direction
- G: gas
- H: hydraulic head
- L: liquid
- F: flow
- V: vortex
- X: longitudinal axis

## Claims

1. An apparatus for treatment of liquid, comprising a liquid receiving surface (7) construed from a plate-like element (15), the plate-like element (15) comprising plurality of holes (18) extending from said liquid receiving surface (7) to another side of the plate-like element (15), and
means for guiding liquid as high velocity flow (F) against said liquid receiving surface (7) in an angle of incidence (A).

2. An apparatus as claimed in claim 1, wherein said liquid is arranged to flow mainly in a first flowing direction (D) on said liquid receiving surface (7) by directing said liquid receiving surface (7) relative to said high velocity flow (F), and wherein
the liquid receiving surface (7) comprising projections (8), the projection (8) having at least one of the holes (18) being arranged to open up to the first flowing direction (D).

3. An apparatus as claimed in claim 1 or 2, wherein the liquid receiving surface (7) is a layer of a layered structure, wherein the plate (15) is arranged at a distance from a support element (25) such that
there is a gap (17) between said plate (15) and said support element (25), and wherein the hole (18) has a communicating relation with the gap (17).

4. An apparatus as claimed in claim 1 or 2, wherein the liquid receiving surface (7) comprises pipes (23) that are arranged to penetrate through the liquid receiving surface (7).

5. An apparatus as claimed in claim 4, wherein the end of the pipe (23) on the side of the liquid receiving surface (7) is arranged to direct to the first flowing direction (D).

6. An apparatus as claimed in claim 1 or 2, wherein the liquid receiving surface (7) comprises at least one pit (24), and a hole (18) arranged to join obliquely to the pit (24) such that the axis of the hole (18) directs downstream of the first flowing direction (D).

7. An apparatus as claimed in any of the preceding claims, comprising a rotating device (5), the rotating device (5) comprising plurality of blades (6) arranged in circumferential manner around the rotating axle (10) of the rotating device (5), and wherein
the liquid receiving surface (7) is arranged in said blades (6).

8. An apparatus as claimed in claim 7, wherein a charging apparatus (19) is coupled to the rotating device (5), the charging apparatus (19) being arranged to resist the rotational movement of the rotating device (5).

9. An apparatus as claimed in claim 8, wherein the charging apparatus (19) is a generator for producing electrical energy, a pump for pumping flowing medium or a brake.

10. An apparatus as claimed in any of the preceding claims, wherein the means for guiding liquid against the liquid receiving surface (7) are arranged so that the angle of incidence is selected in range of 45° - 90°.

11. An apparatus as claimed in any of the preceding claims, wherein the means for guiding liquid comprises a vortex channel (2), the vortex channel (2) comprising a flow directing wall (11) arranged to guide the liquid (L), the flow directing wall (11) comprising a guide surface (12) arranged thereto and obliquely to the longitudinal axis (X) of the vortex channel (2).

12. An apparatus as claimed in any of the preceding claims, wherein the means for guiding liquid comprises means for diverging water into plurality of vortexes (V) comprises a liquid guiding guide vane (14) arranged obliquely to the longitudinal axis (X) of the diverging device (4).

13. An apparatus as claimed in any of the preceding claims, wherein the means for guiding liquid comprises an ejector conduit (3) for feeding an additive, such as gas (G), into said liquid (L).
